# DEMANDE DE BREVET EUROPEEN

(11) **EP 2 036 678 A1**
(43) Date de publication de la demande: **18.03.2009**
(21) Numéro de dépôt: 08163122.8
(22) Date de dépôt: 28.08.2008
(51) Int. Cl.: B25B 23/08, F16B 41/00

(54) **Plaque de maintien amovible pour moyens de fixation d'une piece, procede de fixation d'une piece sur un support et piece munie de tels moyens**

(30) Priorité: 14.09.2007 FR 0757562
(71) Demandeur: PEUGEOT CITROËN AUTOMOBILES S.A., 78140 Vélizy Villacoublay (FR)
(72) Inventeur: Champeau, Laurent, 95310 Saint Ouen L'Aumone (FR); Thiebaut, René, 08000 Charleville-Mezieres (FR)
(74) Mandataire: Ménès, Catherine

(57) **Abrégé**

L'invention concerne une plaque de maintien (4) amovible pour le maintien de moyens de fixation (2) embarqués sur une pièce destinée à être solidarisée avec un support, le procédé de fixation d'une pièce destinée à être solidarisée avec un support ainsi que la pièce fixée avec une telle plaque de maintien ou un tel procédé.

La plaque de maintien (4) est caractérisée en ce qu'elle est amovible et extraite d'un seul tenant de la surface de contact (1a) de la pièce (1) par traction d'un opérateur sur cette plaque (4) avant la fixation finale de la pièce sur le support.

Applications pour toutes pièces mécaniques.

## Description

L'invention concerne une plaque de maintien amovible pour le maintien de moyens de fixation embarqués sur une pièce destinée à être solidarisée avec un support.
Lors de la solidarisation d'une pièce sur un support, de nombreuses erreurs de montage sont possibles du fait, par exemple, de l'utilisation de moyens de fixation non adéquats pour la solidarisation de la pièce.
Ainsi, lors d'un montage avec moyens de fixation sous forme de vis, l'opérateur peut utiliser des vis légèrement plus longues ou plus courtes que celles requises ce qui peut entraîner des problèmes de désolidarisation à long terme de la pièce d'avec son support.
Pur éviter de telles erreurs, il est connu d'utiliser des procédés de reconnaissance de pièces et de ses moyens de fixation comme, par exemple, le marquage par codes barres ou le dépôt des divers éléments nécessaires à la solidarisation dans un meuble d'aide au choix. Ces procédés sont cependant lourds de mise en oeuvre et onéreux.
Pour palier à ces inconvénients, il est aussi déjà connu pour une pièce, destinée à être solidarisée sur un support, de la munir préalablement à cette solidarisation, par exemple lors de la fabrication de cette pièce, de ses moyens de fixation, par exemple des vis, maintenues en position enfoncée dans leur évidement respectif sur la pièce au moyen d'une plaque de carton. Les parties extrêmes des vis, faisant saillie au delà de la pièce, sont engagées et maintenues par la plaque de carton qu'elles traversent. Juste avant le positionnement de la pièce sur le support, la plaque de carton est enlevée ce qui entraîne une manoeuvre peu commode et crée le risque de libérer intempestivement les vis qui peuvent alors se dégager de leur évidement sur la pièce et se détacher de celle-ci.
Le document FR-A-2 208 692 décrit un dispositif de fixation comportant une plaque de base percée d'évidements traversés par des vis s'engageant dans une surface support, ladite plaque de base étant munie en regard de chacun de ses évidements d'un organe en matière déformable présentant un alésage central d'un diamètre sensiblement égal à celui de la vis et dans lequel est engagée et maintenue fermement la vis de montage. Ces organes de matière déformable sont liés à demeure avec la pièce et sont incorporés à celle-ci ce qui complique la préparation de la pièce à fixer du fait du positionnement de ces organes sur cette pièce. D'autre part, leur forme doit être adaptée aux évidements de la pièce dans lesquels ils doivent être logés avec des tolérances réduites pour bien remplir leur rôle de maintien des vis.
Il existe donc un besoin reconnu de munir une pièce lors de sa fabrication de ses moyens de fixation pour une étape ultérieure de solidarisation de la pièce avec son support. Il est ainsi proposé aux postes de montage des kits de pièces à monter prêts à l'emploi qui optimiseront les temps d'intégration. Ces pièces avec leurs moyens de fixation embarqués doivent pouvoir supporter le transport de l'atelier de fabrication vers l'atelier de montage sans risque d'être endommagées ou désolidarisées de leurs moyens de fixation.
Ces pièces prêtes à l'emploi avec moyens de fixation embarqués, par l'intermédiaire d'un moyen d'aide à l'embarquement des moyens de fixation, doivent respecter trois conditions. La première est relative à l'embarquement des moyens de fixation sur la pièce devant être assez solide pour supporter diverses manutentions, par exemple un transport plus ou moins long de l'atelier de fabrication de la pièce qui peut être chez un sous-traitant vers l'atelier de montage de la pièce. La seconde est relative au montage proprement dit où le moyen d'aide à l'embarquement des moyens de fixation doit être facilement amovible ou escamotable pour ne pas entraîner une étape supplémentaire dans l'opération de fixation de la pièce sur son support. Enfin, la troisième condition impose que le moyen d'aide à l'embarquement des moyens de fixation soit d'un prix réduit surtout s'il est retiré de la pièce avant montage et, de préférence, facilement recyclable.

La présente invention a pour but de permettre la préparation d'un ensemble pièce avec ses moyens de fixation embarqués, cet ensemble étant prêt à être fixé, la pièce présentant des moyens d'aide à l'embarquement des moyens de fixation permettant de répondre aux trois conditions exposées ci-dessus.

A cet effet, l'invention a pour objet une plaque de maintien de moyens de fixation embarqués sur une pièce destinée à être solidarisée avec un support, cette plaque étant disposée sur la surface de contact de la pièce, destinée à être appliquée sur le support, les moyens de fixation étant, préalablement à la fixation sur le support de la pièce, maintenus en position par cette plaque de maintien avec leur extrémité de fixation dépassant de cette plaque, **caractérisée en ce que** cette plaque de maintien est amovible et extraite d'un seul tenant de la surface de contact de la pièce par traction d'un opérateur sur cette plaque avant la fixation finale de la pièce sur le support.

Selon des caractéristiques additionnelles de la présente invention :
- la plaque de maintien entoure partiellement les moyens de fixation en laissant des ouvertures autour de ces moyens de fixation et est extraite dans une direction sensiblement opposée aux ouvertures prévues autour des moyens de fixation,
- la plaque de maintien entoure chaque moyen de fixation avec une ligne de moindre résistance, les lignes des moyens de fixation étant sensiblement parallèles entre elles et s'écartant de ces moyens de fixation dans une direction donnée vers un bord de la plaque de maintien et la plaque de maintien est extraite dans une direction sensiblement opposée à la direction des lignes de moindre résistance,
- la plaque de maintien présente au moins une languette dépassant latéralement de la surface de contact de la pièce avec le support, l'opérateur tirant sur cette languette pour provoquer l'extraction de cette plaque de maintien,
- la plaque de maintien est en carton plastifié,
- l'épaisseur de la plaque de maintien est déterminée pour permettre un maintien efficace des moyens de fixation, d'une part, tout en laissant dépasser une petite partie d'extrémité de ces moyens pour le prépositionnement et, d'autre part, tout en pouvant être extraite sous une force de traction faible.

L'invention concerne aussi un procédé de fixation sur un support d'une pièce mécanique destinée à être fixée sur ce support par des moyens de fixation, comprenant les étapes suivantes :
- fabrication de la pièce mécanique,
- après cette étape de fabrication et avant l'étape de fixation de la pièce sur le support, solidarisation et maintien en position sur cette pièce des moyens de fixation par ajout d'un élément amovible en contact avec ces moyens de fixation, notamment lors du transfert de cette pièce vers le poste de montage sur support,
- prépositionnement de la pièce sur le support par logement des extrémités des moyens de fixation encore maintenus par l'élément amovible dans des moyens de réception correspondants de ce support,
- extraction de l'élément amovible de la surface de contact de la pièce avec le support et assemblage final des moyens de fixation avec le support.

L'invention concerne aussi une pièce mécanique destinée à être fixée sur un support par des moyens de fixation, **caractérisée en ce que** ses moyens de fixation sont embarqués sur cette pièce par l'intermédiaire d'une telle plaque de maintien ou en ce qu'elle est fixée sur le support selon un tel procédé.
Avantageusement, le prépositionnement de cette pièce s'effectue par introduction des moyens de fixation dans des logements correspondants du support, des goupilles d'accostage pouvant être avantageusement prévues sur la pièce ou le support en coopération avec des logements prévus sur le support ou la pièce.
La pièce mécanique peut être une pièce de véhicule automobile, notamment un support de moteur inférieur.

Le fait que la plaque amovible puisse être extraite d'un seul tenant d'entre la pièce et le support, avant la fixation finale de la pièce sur le support, permet d'obtenir une surface de contact entre ces deux éléments libre de tout résidu de plaque pouvant affaiblir le contact entre la pièce et son support.

L'invention va maintenant être décrite plus en détail mais de façon non limitative en regard des figures annexées, dans lesquelles :
- la figure 1 est une représentation schématique en perspective d'une pièce destinée à être fixée sur un support avec ses moyens de fixation maintenus en place par des moyens d'aide à l'embarquement sous la forme d'une plaque de maintien selon la présente invention,
- la figure 2 est une vue de la face de la pièce destinée à être en contact avec le support montrant la plaque de maintien de cette pièce conformément à la présente invention,
- la figure 3 est une vue de côté en perspective d'une partie la pièce avec deux de ses moyens de fixation munis de la plaque de maintien, conformément à la présente invention,
- la figure 4 est une vue arrière de la pièce prête à être fixée sur le support lors de l'extraction de la plaque de maintien, conformément à la présente invention.

Il convient, tout d'abord, de préciser que les moyens d'aide à l'embarquement, sous forme d'une plaque de maintien, qui vont être décrits ne sont pas limités à un type de pièce mais peuvent au contraire s'appliquer à une grande diversité de pièces destinées à être solidarisées par des moyens de fixation à un support quelconque. De même, l'emploi de cette plaque de maintien ne se réduit pas à un domaine technique spécifique mais est applicable à toute opération mécanique de fixation d'une pièce sur un support.

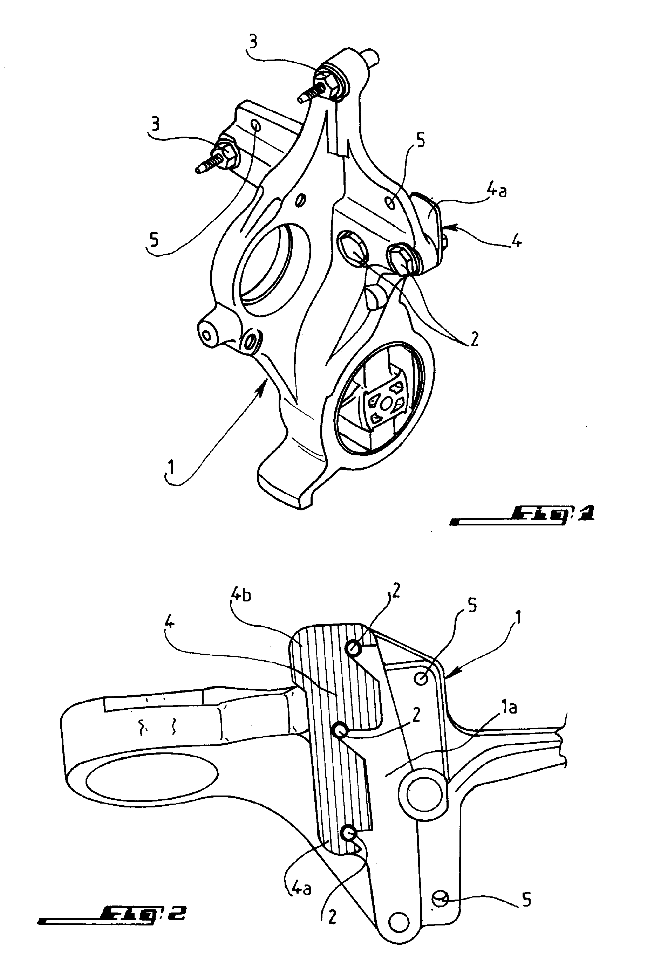

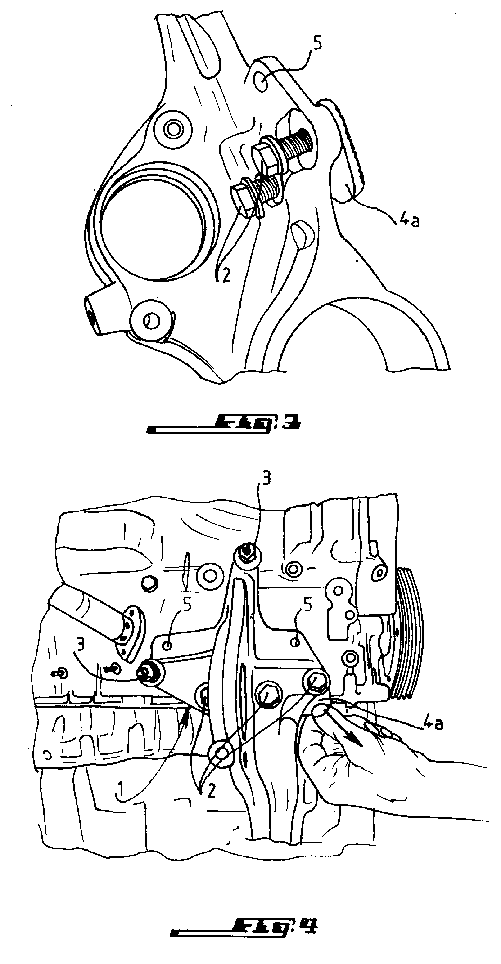

Les figures 1 à 3 permettent de mieux comprendre la forme et l'effet technique des moyens d'aide à l'embarquement des moyens de fixation de la pièce.
Une pièce 1 de forme quelconque est destinée à être fixée sur un support par des moyens de fixation 2. Accessoirement, cette pièce 1 comprend aussi des moyens de positionnement sur le support, par exemple sous la forme de vis colonnettes 3 ou des goupilles de positionnement 5 pénétrant dans un évidement associé du support. Selon la présente invention, pour le maintien des vis 2 avant fixation, des moyens 4 d'aide à l'embarquement des vis 2 sont prévus. Ces moyens sont sous la forme d'une plaque de maintien 4 qui sera mieux vue à la figure 2.

A cette figure, la plaque de maintien 4 s'étend contre une partie de la surface de contact futur la de la pièce 1 avec le support. Selon une caractéristique essentielle de la présente invention, la plaque de maintien 4 est une plaque amovible qui est extraite d'un seul tenant de la surface de contact de la pièce par traction d'un opérateur sur cette plaque après le prépositionnement de la pièce sur le support.
La plaque de maintien 4 entoure partiellement les moyens de fixation sous la forme de vis 2, suffisamment pour retenir les vis 2 en position embarquée sur la pièce 1 mais aussi de manière incomplète afin de pouvoir être retirée facilement lors de l'étape finale du montage de la pièce sur le support. Par exemple, les parties 4a ou 4b de la plaque de maintien 4 peuvent faire saillie latéralement de la surface de contact 1a de la pièce 1 appliquée contre le support et faire office de languette pour l'extraction de cette plaque de maintien 4, l'opérateur tirant sur cette languette 4a ou 4b pour retirer cette plaque de maintien 4 du contact avec une partie de la surface de contact 1a de la pièce 1.
La position de cette languette 4a ou 4b sera établie afin que, quand une action de traction s'exerce sur elle dans une certaine direction, aucune partie de la plaque de maintien 4 ne s'oppose à cet effort de traction et, plus spécialement, afin que les parties de cette plaque de maintien 4 entourant les vis 2 ne fassent pas butée contre les vis lors de ce mouvement de traction, ce qui explique pourquoi les vis 2 ne sont entourées que partiellement par cette plaque de maintien 4 en laissant des vides permettant de libérer cette plaque des vis lors de la traction sur la languette 4a ou 4b.
Il est possible d'avoir plusieurs languettes 4a ou 4b pour permettre une meilleure extraction de la plaque de maintien 4. Cette opération doit s'effectuer dans un temps court pour respecter, le cas échéant, un temps de cadencement sur une chaîne de montage.

En alternative aux ouvertures pratiquées dans la plaque de maintien, celle-ci peut comprendre des lignes de moindre résistance. Les lignes de moindre résistance partent d'une vis associée 2 en étant sensiblement parallèles entre elles et s'écartent de cette vis 2 dans une direction donnée vers un bord de la plaque de maintien 4.
Lors de la solidarisation de la pièce 1 sur le support, la plaque de maintien 4 est extraite d'entre la surface de contact 1a de la pièce 1 et le support par traction de l'opérateur sur celle-ci dans une direction sensiblement opposée à la direction des lignes de moindre résistance, les parties de la plaque de maintien 4 de chaque côté de la ligne de moindre résistance se séparant par rupture de cette ligne de moindre résistance afin de permettre de dégager la plaque de maintien 4 de la surface de contact 1a de la pièce 1. Ces lignes de moindre résistance peuvent être préalablement réalisées par incision de la plaque de maintien 4.
Préférentiellement, notamment dans le cas de fixation de pièce lourde, la surface de contact 1a de la pièce 1 avec les support est équipée, coté support, d'au moins une goupille de centrage 5 pour faciliter l'accostage de la pièce sur le support et soulager l'opérateur afin qu'il puisse libérer une de ses mains dans le but de pouvoir introduire et serrer les vis de fixation. Le contraire, c'est-à-dire de munir la surface de contact 1a de fixation de la pièce 1 d'un ou d'évidements pour la réception d'une ou de goupilles portées par le support est aussi possible.
Un paramètre de la présente invention est la détermination de la longueur de dépassement des vis 2 par rapport à la plaque 4 pour effectuer un montage optimum en bord de ligne.
Ces vis 2 doivent légèrement dépasser pour pénétrer dans leur évidement associé du support afin d'effectuer un prépositionnement de la pièce 1 sur ce support mais ce dépassement doit être limité sinon la surface de contact 1a de fixation de la pièce 1 n'est plus en contact avec le support. Le dépassement des filets des vis 2 ainsi que l'épaisseur de la plaque de maintien 4 doivent donc être déterminés pour conserver cette fonction de prépositionnement de la pièce.
Un second paramètre de la présente invention est la sélection de la matière composant la plaque de maintien 4.
La plaque de maintien 4 est, préférentiellement, en carton plastifié. En effet, celle-ci doit pouvoir maintenir les vis 2 en position embarquée, c'est-à-dire être capable, par exemple, de résister au conditionnement et au transport vers l'usine terminale sans perte des vis. En plus, la plaque de maintien 4 doit ne pas présenter de résistance importante qui pourrait perturber l'opération de prépositionnement des vis. Enfin, lors de l'extraction de la plaque de maintien 4 après prépositionnement des vis, celle-ci ne doit en aucun cas se déchirer en plusieurs morceaux afin d'éviter la présence de résidus entre le support et la surface de contact 1a de la pièce 1 avec le support, ce qui peut occasionner un risque de perte de résistance de l'assemblage vissé du à un mauvais contact entre la pièce et son support.
Avantageusement, après extraction de la plaque de maintien, celle-ci est recyclée.

L'invention concerne aussi un procédé de fixation sur un support d'une pièce 1 mécanique destinée à être fixée sur ce support par des moyens de fixation 2, avec l'étape de fabrication de la pièce 1 mécanique ; après cette étape de fabrication et avant l'étape de fixation de la pièce 1 sur le support, l'étape de solidarisation et maintien en position sur cette pièce 1 de moyens de fixation 2 par ajout d'un élément amovible 4 en contact avec ces moyens de fixation 2, notamment lors du transfert de cette pièce 1 vers le poste de montage sur support ; ensuite de l'étape de prépositionnement de la pièce 1 sur le support par logement des extrémités des moyens de fixation 2 encore maintenus par l'élément amovible 4 dans des moyens de réception correspondants de ce support ; et finalement de l'étape d'extraction de l'élément amovible 4 de la surface de contact de la pièce 1 avec le support et assemblage final des moyens de fixation avec le support.

L'invention concerne aussi une pièce 1 mécanique destinée à être fixée sur un support par des moyens de fixation 2 qui sont embarqués sur cette pièce 1 par l'intermédiaire d'une telle plaque de maintien 4.
Cette pièce peut être une pièce de véhicule automobile, notamment un support de moteur inférieur, mais cela n'a pas du tout un caractère exclusif et la pièce peut être une pièce mécanique quelconque devant être fixée sur un support.

Les avantages de la présente invention sont nombreux. Entre autres, on pourra citer :
La présente invention permet d'éviter de nombreuses erreurs humaines en bord de ligne, par exemple utilisation de moyens de fixation inappropriés en taille, qui pourraient être lourdes de conséquence pour la fixation de la pièce sur le support.
La présente invention permet d'éviter de solliciter des systèmes de tris lourds tels que des codes barres ou des meubles d'aide au choix, particulièrement encombrants au bord d'une ligne de montage.
Elle permet aussi d'éviter une perte de moyens de fixation ou voire même une détérioration de ceux-ci, par exemple, dans le cas de vis de montage, une détérioration des filets, notamment quand les moyens de fixation tombent à terre.
Elle procure un gain de temps lors du montage de la pièce sur le support par prépositionnement des moyens de fixation.
Enfin, la présente invention permet une optimisation de l'ergonomie du poste et de la gestuelle de l'opérateur.

## Revendications

1. Plaque de maintien (4) de moyens de fixation (2) embarqués sur une pièce destinée à être solidarisée avec un support, cette plaque étant disposée sur la surface de contact (1a) de la pièce (1), destinée à être appliquée sur le support, les moyens de fixation (2) étant, préalablement à la fixation sur le support de la pièce (1), maintenus en position par cette plaque de maintien (4) avec leur extrémité de fixation dépassant de cette plaque, **caractérisée en ce que** cette plaque de maintien (4) est amovible et extraite d'un seul tenant de la surface de contact (1a) de la pièce (1) par traction d'un opérateur sur cette plaque (4) avant la fixation finale de la pièce (1) sur le support.

2. Plaque de maintien (4) selon la revendication 1, **caractérisée en ce qu'**elle entoure partiellement les moyens de fixation (2) en laissant des ouvertures autour de ces moyens de fixation (2) et **en ce qu'**elle est extraite dans une direction sensiblement opposée aux ouvertures prévues autour des moyens de fixation (2).

3. Plaque de maintien (4) selon la revendication 1, **caractérisée en ce qu'**elle entoure chaque moyen de fixation (2) avec une ligne de moindre résistance, les lignes des moyens de fixation (2) étant sensiblement parallèles entre elles et s'écartant de ces moyens de fixation (2) dans une direction donnée vers un bord de la plaque de maintien (4) et **en ce que** la plaque de maintien (4) est extraite dans une direction sensiblement opposée à la direction des lignes de moindre résistance.

4. Plaque de maintien (4) selon l'une quelconque des revendications 1 à 3, **caractérisée en ce qu'**elle présente au moins une languette (4a ou 4b) dépassant latéralement de la surface de contact (1a) de la pièce (1) avec le support, l'opérateur tirant sur cette languette (4a ou 4b) pour provoquer l'extraction de cette plaque de maintien (4).

5. Plaque de maintien (4) selon l'une quelconque des revendications précédentes, **caractérisée en ce qu'**elle est en carton plastifié.

6. Plaque de maintien (4) selon l'une quelconque des revendications précédentes, **caractérisée en ce que** son épaisseur est déterminée pour permettre un maintien efficace des moyens de fixation (2) tout en laissant dépasser une petite partie d'extrémité de ces moyens (2) pour le prépositionnement et tout en pouvant être extraite sous une force de traction faible.

7. Procédé de fixation sur un support d'une pièce (1) mécanique destinée à être fixée sur ce support par des moyens de fixation (2), comprenant les étapes suivantes :
- fabrication de la pièce (1) mécanique,
- après cette étape de fabrication et avant l'étape de fixation de la pièce (1) sur le support, solidarisation et maintien en position sur cette pièce (1) de moyens de fixation (2) par ajout d'un élément amovible (4) en contact avec ces moyens de fixation (2), notamment lors du transfert de cette pièce (1) vers le poste de montage sur support,
- prépositionnement de la pièce (1) sur le support par logement des extrémités des moyens de fixation (2) encore maintenus par l'élément amovible (4) dans des moyens de réception correspondants de ce support,
- extraction de l'élément amovible de la surface de contact de la pièce (1) avec le support et assemblage final des moyens de fixation avec le support.

8. Pièce (1) mécanique destinée à être fixée sur un support par des moyens de fixation (2), **caractérisée en ce que** ses moyens de fixation (2) sont embarqués sur cette pièce (1) par l'intermédiaire d'une plaque de maintien (4) selon l'une quelconque des revendications précédentes 1 à 6 ou **en ce qu'**elle est fixée sur le support selon le procédé de la revendication 7.

9. Pièce (1) mécanique selon la revendication 8, **caractérisée en ce que** le prépositionnement de cette pièce (1) s'effectue par introduction des moyens de fixation (2) dans des logements correspondants du support, des goupilles d'accostage (5) pouvant être avantageusement prévues sur la pièce (1) ou le support en coopération avec des logements prévus sur le support ou la pièce (1) .

10. Pièce (1) mécanique selon la revendication 8 ou 9, **caractérisée en ce qu'**elle est une pièce (1) de véhicule automobile, notamment un support de moteur inférieur.
